Europäisches Patentamt

European Patent Office

Office européen des brevets

(19)

(11) Publication number: **0 026 753**
**B1**

# EUROPEAN PATENT SPECIFICATION

(45) Date of publication of patent specification: **27.06.84**

(21) Application number: **80850140.7**

(22) Date of filing: **26.09.80**

(51) Int. Cl.³: **B 65 C 9/36,** B 41 F 17/24, H 02 K 41/02

(54) A method and a device for repeatedly applying a contact pressure of a predetermined magnitude.

(30) Priority: **01.10.79 SE 7908099**

(43) Date of publication of application:
**08.04.81 Bulletin 81/14**

(45) Publication of the grant of the patent:
**27.06.84 Bulletin 84/26**

(84) Designated Contracting States:
**BE DE FR GB IT NL**

(56) References cited:
**DE - A - 2 719 957**
**US - A - 3 895 281**

**ELEKTROTECHNIK, vol. 50, no. 14, 24th July 1968, pages 225-227 O.H. MUTSCHKE:**
**"Lineare Induktionsmotoren und ihre Anwendung"**
**POLYTECHNISCH TIJDSCHRIFT, vol. 30, no. 14, 9th July 1975, pages 443-454 G. LUDA: "Het toepassingsgebied van de lineaire motor"**

**The file contains technical information submitted after the application was filed and not included in this specification**

(73) Proprietor: **Propoflex, Ulf Tönnesen**
**Datavägen 55**
**S-436 00 Askim (SE)**

(72) Inventor: **Tönnesen, Ulf**
**Kobbegärden 44**
**S-43600 Askim (SE)**

(74) Representative: **MacFie, W.R.**
**Backers Patentbyra AB Drottninggatan 15**
**S-41114 Göteborg (SE)**

Courier Press, Leamington Spa, England.

## Description

The present invention refers to a method for repeatedly causing a contact of predetermined character between a body movable in a rectilinear path and individual items in a series, which is brought to pass transversely to the path. The invention also includes a device for working this method.

Devices operating according to the method indicated above can be used for different purposes, where a rapid and exact time control is desirable. One field of use, where the invention will offer many advantages compared with those offered by known technique, is with labelling machines of different kinds, for instance price-marking machines.

Machines for such purposes, where items, for instance packages of foodstuff, are continuously forwarded and marked, for instance by means of an adhesive label, usually comprises a compressed air driven applicator. Known embodiments for instance of the type shown in DE OS 27 19 957 have not operated sufficiently rapid, and the air driven components are often too noisy.

The aim of the present invention is to provide means for rapidly and efficiently causing an impact of predetermined magnitude upon an item, providing a possibility to attach a label, or to print an identification code directly upon the item.

A method according to the invention is applicable to a body movable in a straight course, which shall impose a contact pressure of a preselected magnitude upon individual items in a series, which is made to pass perpendicularly to said course and is characterized in mounting the body upon the armature of an electric linear motor, designed so its frictional losses mainly balance the gravity forces of the component associated with the armature, arranging an upper end position catch for the armature, and issuing, by means of sensor means in the travelling course of the items and actuable by a passing item, a first current supply pulse to the motor for accelerating the same towards the item, the electric energy supplied by said current supply pulse being adjusted so a suitable velocity and thus inertia for bringing about the desired contact pressure upon the item is obtained, and further supplying, when the desired contact has occurred, a second, reversing current supply pulse for lifting the armature back to its starting position.

A device according to the invention comprises a body for transmitting the contact pressure from an upper rest position, upon receipt of a signal from the transport course is moved downwardly into contact with the item. The device is characterized in that the body is mounted upon the armature of a vertically arranged electric linear motor, located above the transport course, the motor being adapted for cooperation with an upper end position catch, and is so designed that frictional losses within the same will mainly compensate gravity forces of the armature and of components moving together therewith, that at least one sensor at the transport course is adapted to control a governing means for issuing a current supply pulse to the linear motor for accelerating its armature towards an item located below the linear motor with a velocity ensuring a satisfactory inertia to provide a desired contact pressure, and for causing, after a predetermined period of time, a second, reversing current supply pulse for lifting the armature back to its starting position, and that means are provided for determining the electric energy supplied by at least the first current supply pulse, with respect to the desired contact pressure.

The device preferably includes means, temporarily introducible in the transport course for stopping an item in the path of the falling body.

One embodiment of the invention will below be described with reference to the accompanying drawing, in which

Figure 1 schematically shows a portion of a marking equipment at a conveyor, and

Figure 2 is a diagram illustrating the relationship between the magnitude of the pulses and the desired impact pressure.

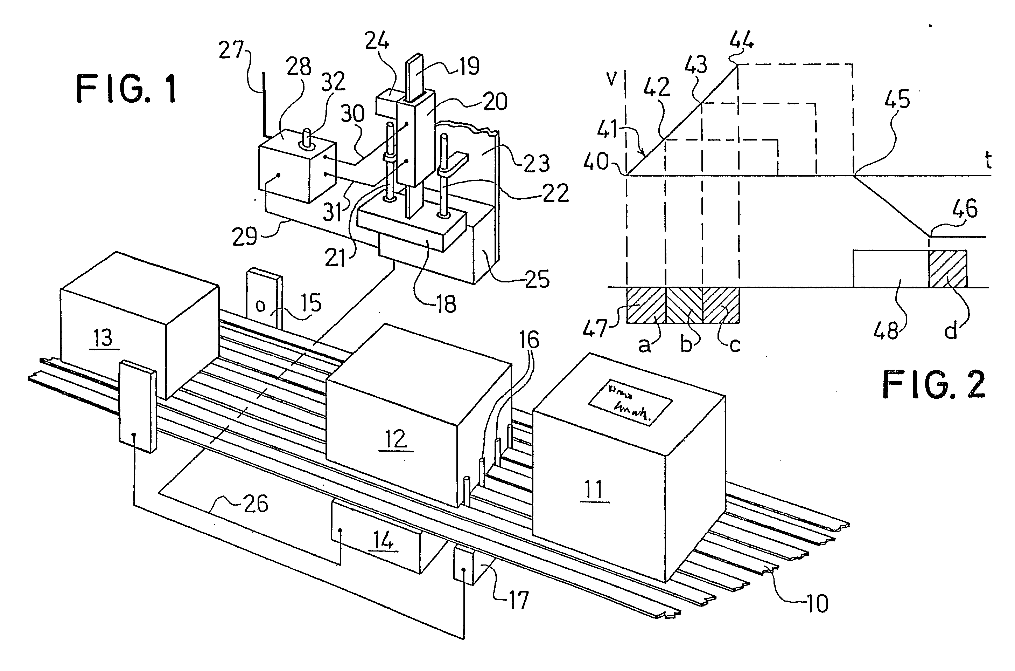

In Figure 1 reference 10 denotes a conveyor of arbitrary known type, upon which a series of items 11, 12, 13 are moved in the direction from left to right in the drawing.

The intention is that each item shall be subjected to a marking operation, which may mean the attaching of a label, or possibly a printing directly upon the item. The size and/or the weight of the items may vary, and a weighing-machine 14 is provided at the conveyor 10, for noting the weight of each passing item. A device 15 comprising a photo-detector governs a grid 16, movable perpendicularly to the conveyor, and operated by a mechanism 17. The grid may be brought up in the path of a moving item and will temporarily stop the same.

Above the conveyor there is a marking apparatus comprising a contact plate 18, which is mounted upon the armature 19 of an electric linear motor 20, located above the conveyor 10 and movable perpendicular thereto. For directing the movement of the pressure plate 18 towards the selected item there are two guides 21 and 22 cooperating with brackets mounted at the stand 23 carrying the equipment.

The linear motor 20 is designed in such a manner that frictional losses therein will mainly balance the gravity forces of the armature and the components mounted thereon. For several reasons it is important that the weight of the movable body be kept as low as possible. The linear motor 20 is provided with an upper end position catch 24, which in a simple embodiment may comprise a spring loaded ball, engaging a recess in the armature. The contact plate 18 may thus be kept suspended in a definite upper position by way of this end position catch of the armature, and a first current supply pulse is required to pull the armature free and to accelerate it downwards. As the speed so obtained will be maintained until an impact upon the item occurs, it is possible to predetermine the magnitude of the contact pressure by selecting the length of the current pulse.

After the impact a second current pulse is required to return the armature 19 to the upper end position, as starting point of a following marking operation.

A labelling machine, schematically denoted by 25, is mounted behind the contact plate 18, and is adapted to feed out a marked label just below the plate. There are many types of similar labelling machines, and this part is no important feature of the present invention.

The exposed label, which preferably is of a self-adhering type, is retained at the contact plate by known technique, for instance by suction or by compressed air pressure, such means being well known in the art and not shown in the drawing.

The weighing-machine 14 is connected to the labelling machine 25 by means of a cable 26, and transfers the desired information to the labelling machine for marking the next label with respect to weight and/or price. Thereafter the label is fed out, and when it has reached its position at the contact plate, the first current pulse to the linear motor is issued.

Current is supplied to the motor by way of a cable 27, which is connected to a governing device 28. This receives signals from the labelling machine 25 by way of a cable 29. The governing device issues a first current supply pulse to the motor by way of a cable 30, for accelerating the motor downwards, and in due course by way of a further cable 31 also a second current supply pulse to the motor, for lifting the same back. A feed-back signal to device 17 from the governing device 28, or from a suitably located sensor moves grid 16 downwards, as soon as armature 18 begins to lift.

For determining the magnitude of the first current supply pulse an adjustment knob 32 is provided at the control device 28.

For both curves in Figure 2 time is the abscissa. The linear motor may obtain a maximum speed of 1,5 m/sec and the speed $v$ will increase linearly from the starting point 40 according to the full line 41. As the frictional losses will balance the forces of gravity, the initially supplied energy will determine the speed attainable, and thus the impact pressure. Within the available length of the travelling path of the armature it is thus possible to interrupt the supply of current at any desired point, and thus to determine the pressure transferred to the item by the contact plate, and which is considered necessary to make the label adhere satisfactorily.

Figure 2 indicates three positions 42—44. These are selected to correspond with certain desired impact pressures, which are independent of the height of the item. Only an insignificant change in speed and inertia will occur with different lengths of the travelling path, as forces of gravity will be balanced by frictional losses during the current-free part of the travel.

When the impact has occurred the armature will be accelerated back from the contact position in point 45, towards the upper end position in point 46.

The lower curve describes the current supply pulses. The first pulse 47 is issued at point 40 and will here comprise three sections $a$, $b$, $c$, which represent the increment necessary to accelerate the armature to speeds indicated at points 42, 43 and 44, respectively.

The second current supply pulse 48, which is directed oppositely compared with the first one, is issued at point 45 and includes an excess increment $d$, which ensures that the armature is always returned to the upper end position.

The embodiment shown is schematically illustrated only, and many modifications and additions are possible within the scope of the appended claims and by use of components known in this field of the art. When it is not necessary to weigh the items, and thus uniform labels, or printing, will be used, the weighing-machine 14 may be substituted by an arbitrary sensing device, which reacts when an item attains the proper position before the grid.

The drawing is, as mentioned above, very simplified and it lies within the competence of a man skilled in the art to include further sensing and governing functions, to guarantee that all components cooperate in the desired manner. The conveyor 10 may thus be started and stopped in step with the action at grid 16.

The friction at the armature may be adjusted for instance by changing the spring pressure upon the ball in the end position catch. The ball will, all the time, engage the armature, or a guide connected thereto.

## Claims

1. A method of repeatedly obtaining, by means of a body (18) movable in a straight course, a contact pressure of a preselected magnitude upon individual items (11—13) in a series, which is made to pass perpendicularly to said course, characterized by mounting the body (18) upon the armature (19) of an electric linear motor (20), designed so its frictional losses mainly balance the gravity forces of the components associated with the armature, arranging an upper end position catch (24) for the armature, and issuing, by means of sensor means (14) in the travelling course (10) of the items and actuable by a passing item, a first current supply pulse (47) to the motor for accelerating the armature towards the item, the electric energy supplied by said current supply pulse being adjusted so a suitable velocity and thus inertia for bringing about the desired contact pressure upon the item is obtained, and further supplying, when the desired contact has occurred, a second, reversing current supply pulse (48) for lifting the armature back to its starting position.

2. A device for repeatedly causing a contact pressure of a predetermined magnitude upon individual items (11—13) in a series moved along a transport course (10), wherein a body (18) for transmitting the contact pressure from an upper rest position, upon receipt of a signal from the transport course is moved downwardly into contact with the item, characterized in that the body (18) is mounted upon the armature (19) of a vertically arranged electric linear motor (20), located above the transport course (10), the armature being adapted for cooperation with an upper end position catch (24), and is so designed that frictional losses within the motor will mainly compensate gravity forces of the armature and of components moving together therewith, that at least one sensor (14) at the transport course is adapted to control a governing means (28) for issuing a current supply pulse (46) to the linear motor for accelerating its armature towards an item located below the linear motor (20) with a velocity ensuring a satisfactory inertia to provide a desired contact pressure, and for causing, after a predetermined period of time, a second, reversing current supply pulse (48) for lifting the armature back to its starting position, and that means (32) are provided for determining the electric energy supplied by at least the first current pulse (46), with respect to the desired contact pressure.

3. A device according to claim 2, characterized in means (16) temporarily introducible in the transport course (10) for stopping an item (12) in the path of the falling body (18).

## Revendications

1. Procédé pour obtenir de façon répétée, au moyen d'un corps (18) mobile sur une course rectiligne, une pression de contact d'une valeur présélectionnée sur des articles individuels (11—13) d'une série, qui est amenée à passer perpendiculairement à ladite course, caractérisé en ce que l'on monte le corps (18) sur l'induit (19) d'un moteur électrique linéaire (20), agencé pour que ses pertes par frottement équilibrent sensiblement les forces de gravité des éléments associés à l'induit, que l'on dispose un cran de position de fin de course supérieure (24) de l'induit, et que l'on délivre, grâce, à des moyens palpeurs (14) situés dans la course de déplacement (10) des articles, et pouvant être actionnés par le passage d'un article, une première impulsion d'alimentation en courant (47) au moteur pour accélérer l'induit vers l'article, l'énergie électrique fournie par ladite impulsion d'alimentation et courant étant ajustée de manière à obtenir une vitesse, et donc une inertie, appropriée pour obtenir la pression de contact souhaitée sur l'article, et que l'on fournit en outre, lorsque le contact souhaité a eu lieu, une seconde impulsion d'alimentation en courant (48), inverseuse, afin de remonter l'induit vers sa position de départ.

2. Dispositif pour provoquer une pression de contact répétée d'une valeur prédéterminée sur des articles individuels (11—13) d'une série déplacés le long d'une course de transport (10), dans lequel un corps (18) destiné à transmettre la pression de contact à partir d'une position de repos supérieure, lors de la réception d'un signal provenant de la course de transport, est amené vers le bas en contact avec l'article, caractérisé en ce que le corps (18) est monté sur l'induit (19) d'un moteur électrique linéaire (20) disposé verticalement situé au dessus de la course de transport (10), l'induit étant agencé pour coopérer avec un cran (24) de position de fin de course supérieure, et est conçu pour que les pertes par frottement à l'intérieur du moteur compensent sensiblement les forces de gravité de l'induit et des éléments se déplaçant avec lui, en ce qu'au moins un palpeur (14) situé sur la course de transport est agencé pour contrôler des moyens de commande (28), pour délivrer une impulsion d'alimentation en courant (46) au moteur linéaire, pour accélérer son induit vers un article situé au dessous du moteur linéaire (20) avec une vitesse assurant une inertie satisfaisante pour obtenir une pression de contact souhaitée, et pour provoquer, après un intervalle de temps prédéterminé, une seconde impulsion d'alimentation (48), inverseuse, pour remonter l'induit vers sa position de départ, et en ce que des moyens (32) sont prévus pour déterminer l'énergie électrique fournie par au moins la première impulsion de courant (46), en fonction de la pression de contact souhaitée.

3. Dispositif selon la revendication 2, caractérisé par des moyens (16) pouvant être temporairement introduits dans la course de transport (10) pour arrêter un article (12) sur le trajet du corps (18) en chute.

## Patentansprüche

1. Verfahren zum wiederholten Erzielen eines Kontaktdruckes vorgewählter Größe auf einzelnen, in einer Bahn aufgereihten Gegenständen (11—13) mittels eines in einer geraden, zur Bahn der Gegenstände senkrechten Bahn bewegbaren Körpers (18), gekennzeichnet durch Befestigung des Körpers (18) auf dem Anker (19) eines elektrischen Linearmotors (20) derart, daß seine Reibungsverluste hauptsächlich die Gravitation der mit dem Anker verbundenen Einzelteile ausgleichen, Anordnung eines oberen Endanschlages (24) für den Anker und Ausgabe eines ersten Stromimpulses (47) an den Motor mittels einer durch einen sich bewegenden Gegenstand auslösbaren Sensoreinrichtung (14) in der Bewegungsbahn (10) der Gegenstände zur Beschleunigung des Ankers zum Gegenstand hin, wobei die elektrische Energie die durch diesen Stromimpuls zugeführt wird, derart eingestellt ist, daß eine geeignete Geschwindigkeit und dementsprechende Trägheit erhalten wird, um auf dem Gegenstand den gewünschten Kontaktdruck auszuüben, und Zuführung eines zweiten Entgegengesetzten Stromimpulses (48) zum Hochheben des Ankers zurück in seine Ausgangslage, wenn der gewünschte Kontakt stattgefunden hat.

2. Vorrichtung zum wiederholten Ausüben eines Kontaktdruckes vorgewählter Größe auf einzelne Gegenstände (11—13), die in einer Reihe entlang einer Transportbahn (10) bewegt werden, worin ein Körper (18) zur Übertragung des Kontaktdruckes von einer oberen Ruhestellung nach Empfang eines Signales von der Transportbahn nach unten in Kontakt mit dem Gegenstand bewegt wird, dadurch gekennzeichnet, daß der Körper (18) auf dem Anker (19) eines vertikal angeordneten elektrischen Linearmotors (20) befestigt ist, der über der Transportbahn (10) angeordnet ist, wobei der Anker zur Zusammenarbeit mit einem oberen Endanschlag (24) geeignet und derart angeordnet ist, daß Reibungsverluste im Motor hauptsächlich Gravitationskräfte des Ankers und der sich mit ihm bewegenden Einzelteile ausgleichen, daß mindestens eine Sensor (14) an der Transportbahn geeignet ist, eine Kontrolleinrichtung (28) zur Abgabe eines Stromimpulses (46) an den Linearmotor zu steuern, um seinen Anker zu einem unter dem Linearmotor (20) angeordneten Gegenstand hin mit einer Geschwindigkeit zu beschleunigen, die eine zufriedenstellende Trägheit sicherstellt, um einen gewünschten Kontaktdruck zu ergeben und um nach einer vorherbestimmten Zeitdauer einen zweiten, umgekehrten Stromimpuls (48) zum Hochheben des Ankers zurück in seine Ausgangslage auszulösen, und daß Einrichtungen (32) vorgesehen sind zur Bestimmung der elektrischen Energie, die durch mindestens den ersten Stromimpuls (46) in Bezug zum gewünschten Kontaktdruck geliefert wird.

3. Vorrichtung nach Anspruch 2, dadurch gekennzeichnet, daß zum Anhalten eines Gegenstandes (12) in der Bahn des fallenden Körpers (18) Einrichtungen (16) vorübergehend in die Transportbahn einbringbar sind.

FIG. 1

FIG. 2